# EUROPEAN PATENT APPLICATION

(11) **EP 0 880 216 A1**
(43) Date of publication of application: **25.11.1998**
(21) Application number: 96901534.6
(22) Date of filing: 05.02.1996
(51) Int. Cl.: H02K 1/26, H02K 17/16

(54) **INDUCTION MOTOR AND ITS ROTOR**

(71) Applicant: Hitachi, Ltd., Chiyoda-ku, Tokyo 101 (JP)
(72) Inventor: KAJIWARA, Kenzou, Hitachi-shi, Ibaraki 316 (JP); MARUYAMA, Syoichi, Higashishirakawa-gun, Fukushima 963-53 (JP); MIKAMI, Hiroyuki, Hitachi-shi, Ibaraki 316 (JP); TAKAHASHI, Miyoshi, Hitachi-shi, Ibaraki 316 (JP); KOHARAGI, Haruo, Taga-gun, Ibaraki 319-13 (JP); ARAI, Keiji, Kitaibaraki-shi, Ibaraki 319-15 (JP); ITO, Motoya, Hitachinaka-shi, Ibaraki 312 (JP)
(74) Representative: Strehl Schübel-Hopf & Partner
(86) International application number: JP9600229
(87) International publication number: WO9729533

(57) **Abstract**

With the object of providing a high-performance induction motor and rotor thereof capable of increasing efficiency and reducing noise and stray loss by setting dimensions of slot apertures provided at a rotor core within an appropriate range, a dimension in a circumferential direction of said apertures of slot apertures provided at upper parts of a plurality of slots 3 provided with a prescribed dimension in the circumferential direction at the side of the outer periphery of a rotor core 2 is set in a range of more than 2.0mm and less than 3.5mm, and a dimension in a diameter direction of the slot apertures is set in a range of 1.0mm to 2.5mm.

## Description

### Technical Field

The present invention relates to an induction motor and a rotor thereof, and particularly relates to an induction motor and rotor thereof having slot apertures at a rotor core surface.

### Background Art

Related technology for induction motors having a slot aperture in a rotor core surface is disclosed in Japanese Patent Laid-open Publication No's. Sho. 56-86060, 56-145753, 56-35665, 58-207848 and 57-28556.

In Japanese Patent Laid-open Publication No's. Sho. 56-86060 and 56-145753, there are disclosed structures where even when a conductive material is cast, no conductive material exists at slot apertures provided for reducing leakage flux. In Japanese Patent Laid-open Publication No. Sho. 56-35665, a rotor has a slot aperture which has a size of approximately 0.1mm and also functions to release gas for an aluminium die casting. In Japanese Patent Laid-open Publication No. Sho. 58-207848, rotor core slots of dimensions 0.2 to 0.6mm are disclosed. In Japanese Patent Laid-open Application No. Sho. 57-28556, tapered rotor core apertures of a width of 0.8mm or less and a height of 0.8mm or less are disclosed.

With the related technology disclosed in Japanese Patent Laid-open Publication No's Sho. 56-86060 and 56-145753, slot apertures are arranged beforehand at a rotor core. Conductive material existing at these slots is then removed after conductive material is cast into these slot apertures. In this way, conductive material, i.e. rotor bars, does not exist within the slot apertures, with the aim being to raise the power factor and reduce stray loss.

With the induction motor disclosed in Japanese Patent Laid-open Publication No. Sho. 56-35665, the extent to which power factor varies is reduced and duct structure is no longer hindered. In that disclosed in Japanese Patent Laid-open Publication No. Sho. 58-207848, efficiency and productivity are increased. Japanese Patent Laid-open Publication No. Sho. 57-28556 proposes improvements to reduce slot variations but only suggests how to reduce noise, with the object of the publication being principally to increase efficiency.

However, according to the experimentation of the inventors of the present invention, in can be seen that there are cases where there is no particular improvement for induction motors with nominal outputs in the range of 40kW to 1000kW even when slot apertures as disclosed in Japanese Patent Laid-open Publication No's Sho. 56-86060 and 56-14573 or slot apertures of the dimensions disclosed in Japanese Patent Laid-open Publication No's Sho. 56-35665, 58-207848 and 57-28556 are provided.

This is to say that it can be determined that higher harmonic in secondary copper loss that comprises part of the noise and stray loss is increased depending on the dimensions of a width w constituting the circumferential width of a slot aperture and a height h, constituting the radial dimension from the surface of a rotor core to a rotor bar, of the slot aperture. In addition to increasing the ripple component of the magnetic flux of the gap due to the influence of the slot aperture, this is also that cause of complex changes in the direction of flow of magnetic flux of the rotor core because of magnetic saturation, etc.

In the above related technology, neither specific aperture dimensions for reducing noise nor higher harmonics in secondary copper loss are considered. In recent years, reducing noise and making machines small has been considered important for induction motors but in the above related technology, consideration has not been given to increases in higher harmonic in secondary copper loss. Instead, by just simply installing a slot aperture, loss, hindering reductions in noise and machine size, has increased.

In order to resolve the aforementioned problems, it is the object of the present invention to provide a high-performance induction motor and rotor thereof capable of increasing power factor and reducing noise and stray loss by setting an appropriate range for dimensions of slot apertures provided at a rotor core.

### Disclosure of Invention

As a result of experimentation, the present inventors discerned that an appropriate range of dimensions exist for slot apertures provided at a rotor core where power factor is be increased while noise and stray loss is reduced. Namely, power factor is increased while noise and stray loss is reduced by setting a dimension in a circumferential direction of the apertures of slot apertures to be greater than 2.0mm and greater than 3.5mm, and setting a dimension in a diameter direction to be from 1.0 to 2.5mm. This was determined to be effective for induction motors of nominal output ratings of 40kW to 1000kW.

In order to obtain an induction motor that achieves the above object, in the present invention, an induction motor is equipped with: a stator; and a rotor concentrically arranged in the stator in such a manner as to leave a prescribed air gap with the inner periphery of the stator, and having a plurality of slots formed one after another in an axial direction at prescribed distances in a circumferential direction. Apertures communicating with the slots are provided on a rotor surface side of the slots, with a dimension in a circumferential direction of the apertures being set in a range of greater than 2.0mm and less than 3.5mm and a dimension in a diameter direction of the apertures being set in a range of 1.0mm to 2.5mm.

Further, an induction motor, with a nominal output rating of 40kW to 600kW, is equipped with: a stator; and a rotor concentrically arranged in the stator in such a manner as to leave a prescribed air gap with the inner periphery of the stator, and having a plurality of slots formed one after another in an axial direction at prescribed distances in a circumferential direction. Apertures communicating with the slots are provided on a rotor surface side of the slots, with a dimension in a circumferential direction of the apertures being set in a range of greater than 2.0mm and less than 3.5mm and a dimension in a diameter direction of the apertures being set in a range of 1.0mm to 2.5mm.

In the present invention, the nominal output rating of the induction motor can also be 40kW to 1000kW.

Moreover, an induction motor is equipped with: a stator; and a rotor concentrically arranged in the stator in such a manner as to leave a prescribed air gap with the inner periphery of the stator, the rotor having: a rotor core having a plurality of slots formed one after another in an axial direction at prescribed distances in a circumferential direction; and rotor bars housed in the slots. Apertures communicating with the slots are provided on a rotor surface side of the slots, with a dimension in a circumferential direction of the apertures being set in a range of greater than 2.0mm and less than 3.5mm and a dimension in a diameter direction of the apertures being set in a range of 1.0mm to 2.5mm.

Still further, an induction motor is equipped with: a stator; and a rotor concentrically arranged in the stator in such a manner as to leave a prescribed air gap with the inner periphery of the stator, the rotor having: a rotor core having a plurality of slots formed one after another in an axial direction at prescribed distances in a circumferential direction; and rotor bars housed in the slots. Apertures communicating with the slots are provided on a rotor surface side of the slots in such a manner that recesses are formed at the housed rotor bars, with a dimension in a circumferential direction of the apertures being set in a range of greater than 2.0mm and less than 3.5mm and a dimension in a diameter direction of the apertures being set in a range of 1.0mm to 2.5mm.

Moreover, an induction motor is equipped with: a stator; and a rotor concentrically arranged in the stator in such a manner as to leave a prescribed air gap with the inner periphery of the stator. The rotor has: a rotor core having a plurality of slots formed one after another in an axial direction at prescribed distances in a circumferential direction; and rotor bars housed in the slots. Apertures communicating with the slots are provided on a rotor surface side of the slots is such a manner that recesses are formed at the housed rotor bars, with a dimension in a circumferential direction of the apertures being set in a range of 2.0mm to 3.5mm, a dimension in a diameter direction of the apertures being set in a range of 1.0mm to 2.5mm and a height of the recesses being set at 0.5mm to 2.0mm.

In order to obtain a rotor of an induction motor that achieves the aforementioned object, in the present invention, a rotor, for an induction motor, has a plurality of slots formed one after another in an axial direction at prescribed distances in a circumferential direction. Apertures communicating with the slots are provided on a rotor surface side of the slots, with a dimension in a circumferential direction of the apertures being set in a range of greater than 2.0mm and less than 3.5mm and a dimension in a diameter direction of the apertures being set in a ranqe of 1.0mm to 2.5mm.

Further, a rotor, for an induction motor of a nominal output rating of 40kW to 600kW, has a plurality of slots formed one after another in an axial direction at prescribed distances in a circumferential direction. Apertures communicating with the slots are provided on a rotor surface side of the slots, with a dimension in a circumferential direction of the apertures being set in a range of greater than 2.0mm and less than 3.5mm and a dimension in a diameter direction of the apertures being set in a range of 1.0mm to 2.5mm.

A nominal output rating of the induction motor of the present invention can also be 40kW to 1000kW.

Still further, a rotor, for an induction motor, is equipped with: a rotor core having a plurality of slots formed one after another in an axial direction at prescribed distances in a circumferential direction; and rotor bars housed in the slots. Apertures communicating with the slots are provided on a rotor surface side of the slots, with a dimension in a circumferential direction of the apertures being set in a range of greater than 2.0mm and less than 3.5mm and a dimension from a surface of the rotor to the rotor bars being set in a range of 1.0mm to 2.5mm.

Moreover, a rotor, for an induction motor, is equipped with: a rotor core having a plurality of slots formed one after another in an axial direction at prescribed distances in a circumferential direction; and rotor bars housed in the slots. Apertures communicating with the slots are provided on a rotor surface side of the slots in such a manner that recesses are formed at the housed rotor bars, with a dimension in a circumferential direction of the apertures being set in a range of greater than 2.0mm and less than 3.5mm and a dimension from a surface of the rotor to a base part of the recesses being set in a range of 1.0mm to 2.5mm.

Even further, a rotor, for an induction motor, is equipped with: a rotor core having a plurality of slots formed one after another in an axial direction at prescribed distances in a circumferential direction; and rotor bars housed in the slots. Apertures communicating with the slots are provided on a rotor surface side of the slots in such a manner that recesses are formed at the housed rotor bars, with a dimension in a circumferential direction of the apertures being set in a range of greater than 2.0mm and less than 3.5mm, a dimension from a surface of the rotor to a base part of the recesses being set in a range of 1.0mm to 2.5mm, and a height of the recess being set at 0.5mm to 2.0mm.

In the present invention described above, the apertures can be formed by machining processes, and can further be formed by machining processes carried out after the rotor bars are housed in the slots.

### Brief Description of Drawings

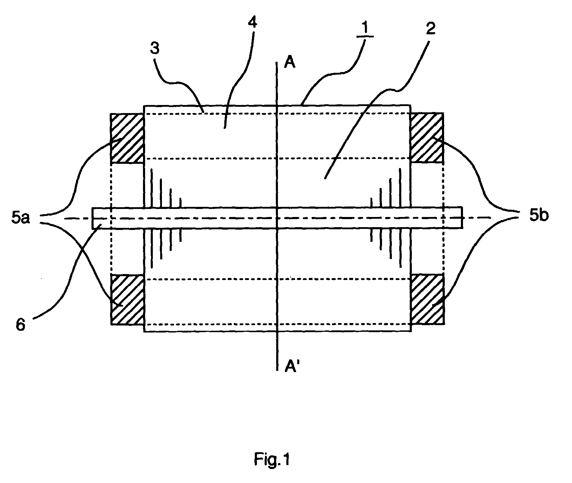

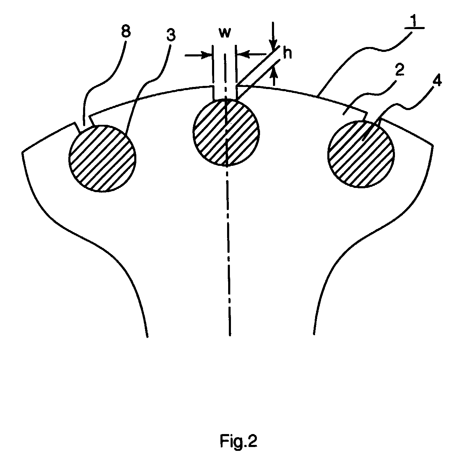

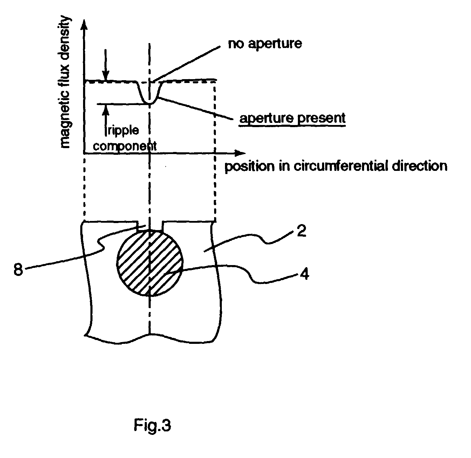

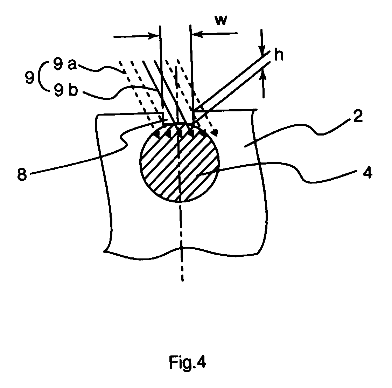

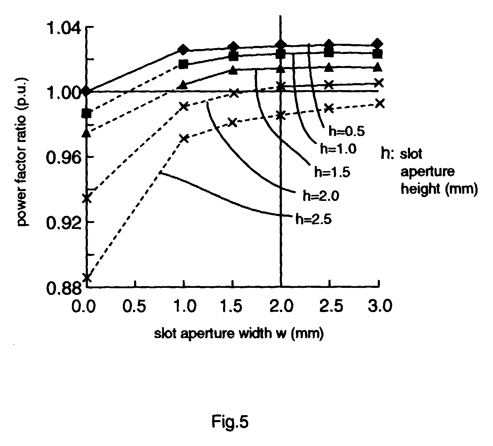

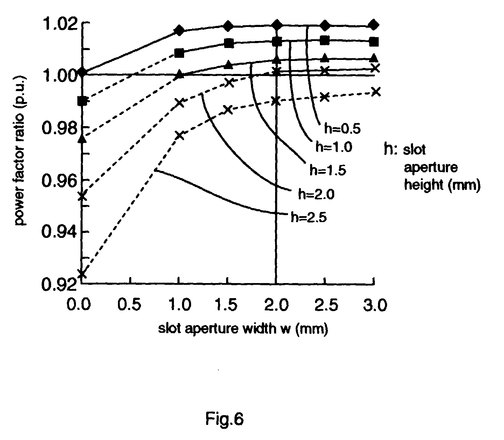

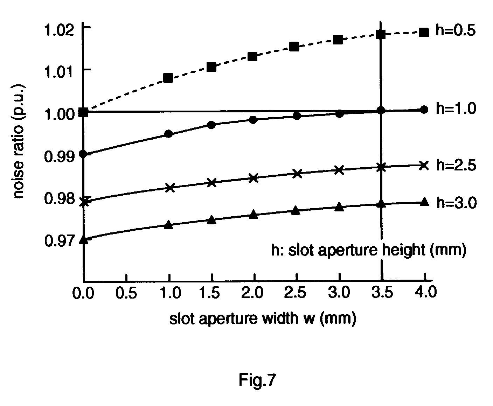

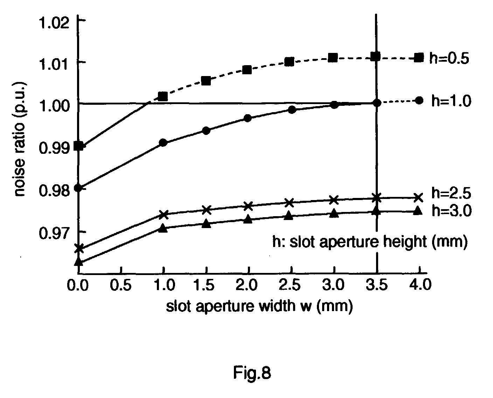

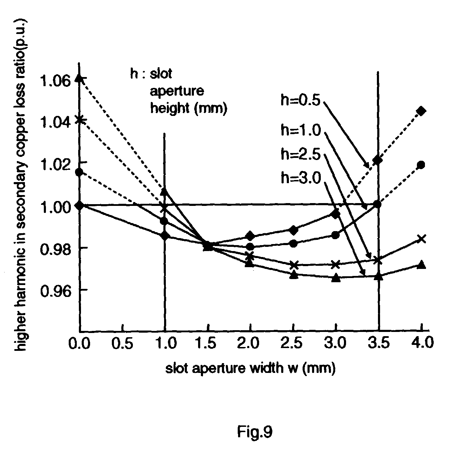

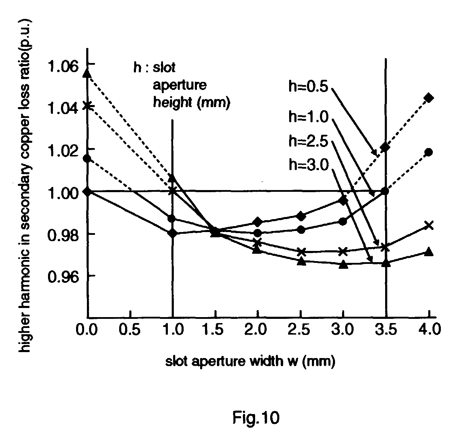

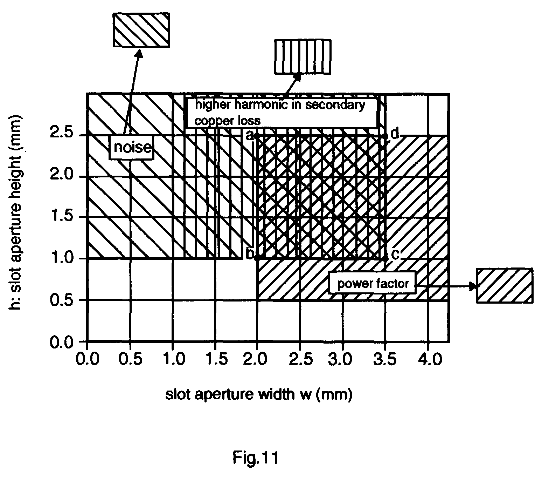

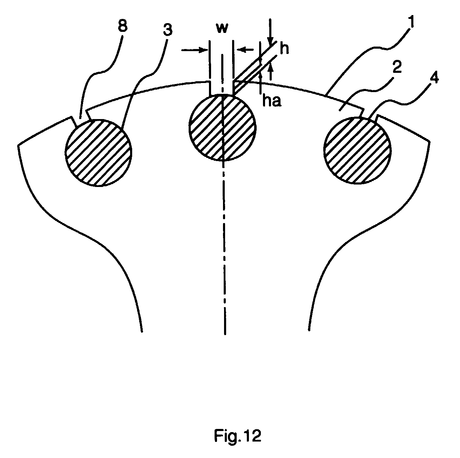

FIG. 1 is a vertical cross-sectional view of a rotor for an induction motor of a first embodiment of the present invention; FIG. 2 is a horizontal cross-sectional view of the periphery of slots of the rotor of the induction motor shown in FIG. 1; FIG. 3 is a schematic view showing magnetic flux density distribution of a gap; FIG. 4 is a schematic view showing flow of flux at the periphery of a slot aperture; FIG. 5 is a view showing the power factor ratio of an induction motor of a nominal output rating of 40kW; FIG. 6 is a view showing the power factor ratio of an induction motor of a nominal output rating of 600kW; FIG. 7 is a view showing the noise ratio of an induction motor of a nominal output rating of 40kW; FIG. 8 is a view showing the noise ratio of an induction motor of a nominal output rating of 600kW; FIG. 9 is a view showing the higher harmonic in secondary copper loss ratio of an induction motor of a nominal output rating of 40kW; FIG. 10 is a view showing the higher harmonic in secondary copper loss ratio of an induction motor of a nominal output rating of 600kW; FIG. 11 is a view illustrating a range of dimensions for the rotary slot apertures of FIG. 2; and FIG. 12 is a horizontal cross-sectional view showing the periphery of slots of a rotor for a further embodiment of an induction motor.

### Best Mode for Carrying Out the Invention

The following is a description with reference to the drawings of the embodiments of the present invention.

FIG. 1 is a vertical cross-sectional view of a rotor for an induction motor of a first embodiment of the present invention. FIG. 2 is a horizontal cross-sectional view of the periphery of slots for the rotor of FIG. 1. FIG. 3 is a schematic view showing magnetic flux density distribution of a gap. FIG. 4 is a schematic view showing the flow of flux at the periphery of a slot aperture. FIG. 5 and FIG. 6 are views showing the power factor ratios of induction motors of nominal output ratings of 40 and 600kWs, respectively. FIG. 7 and FIG. 8 are views showing noise ratios for induction motors of nominal output ratings of 40 and 600kWs, respectively. FIG. 9 and FIG. 10 are views showing higher harmonic in secondary copper loss ratios for induction motors of nominal output ratings of 40 and 600kWs, respectively. FIG. 11 is a view illustrating the range of dimensions for rotor slot apertures of the induction motor of this embodiment.

The induction motor is equipped with a cylindrical stator, not shown in the drawings, and a rotor 1 concentrically arranged in the stator via an air gap (gap) in such a manner as to be freely rotatable on an axis concentric with that of the stator.

The stator is equipped with a cylindrical stator core fitting into a stator frame equipped with a cooling ventilation case at an upper part thereof, with a stator winding being wound around this stator core. A fan (not shown) is provided within the stator frame for cooling down heat generated by the rotor 1 and the stator.

The rotor 1 is equipped with a rotor core 2 fitting into a rotor shaft 6 provided at the center thereof. The rotor shaft 6 is axially supported by bearings provided at brackets at each end of the stator frame. The rotor 1 is therefore supported at the stator so as to be freely rotatable.

Rotor conductors 4, i.e. rotor windings, are formed at the outer periphery of the rotor core 2 at prescribed distances in the circumferential direction, with a plurality of slots 3 then being formed, one after another, in the axial direction. Conductive material is then cast into each of the plurality of slots 3. Each of the rotor conductors 4 are joined by short circuit rings 5a and 5b provided at the ends of the rotor core 2 so that a rotor current path is formed.

Slot apertures 8 are axially formed one after another in the axial direction on the rotor surface side of the plurality of slots 3 provided on the rotor core 2 in such a manner as to communicate with these slots. These slot apertures 8 are formed at the upper parts of the slots 3 by carrying out mechanical processing after the plurality of slots 3 are formed, the conductor material is cast, and the rotor conductors 4 are formed. In this case, there is a method where slot apertures are formed beforehand at the slots in the rotor core with conductor material then being cast into each of the plurality of slots. However, in this method. conductor material is also cast into the slot apertures formed at the upper parts of the slots and as a result, stray loss due to noise and higher harmonic in secondary current increases substantially. Therefore, in this embodiment, for example, slot apertures 8 are formed in the above way so that conductor material does not exist within the slot apertures 8 in such a manner the characteristic properties of the slot apertures 8 become equal to an air gap (not shown) existing between the stator and the rotor 1.

With a closed slot structure, leakage flux generally increases due to the rotor cores corresponding to the head parts of the rotor conductors 4 forming magnetic bridges. Steps are therefore usually taken to reduce the height of the magnetic bridge by as great an extent as possible while maintaining mechanical strength, in order to prevent rises in temperature due to lowering of the power factor and increasing of primary and secondary currents from being greater than necessary. If other aspects of the structure are therefore identical, with the exception of the cross-sectional shape of the slots 3 of the rotor 1, the power factor of the induction motor will depend on the slot leakage reactance, which is decided principally by the cross-sectional shape of the rotor slots 3 **("slots 3 of the rotor 1?")**. When not only slot leakage reactance, but also the leakage reactance is larger than required, the primary and secondary currents are increased and the power factor and efficiency therefore deteriorate. In particular, when the slot apertures 8 do not exist, the magnetic bridges become magnetically short-circuited, leakage flux increases, and slot leakage reactance also increases. Conversely, when slot apertures 8 are provided, slot leakage flux is markedly reduced compared with when the slot apertures 8 do not exist, and the power factor can be improved.

However, the following problems occur when slot apertures are provided. Namely, as shown in FIG. 3, the gap permeance distribution becomes uneven when slot apertures 8 are provided and a gap flux ripple component is therefore increased compared with when slot apertures 8 are not provided. As a result, higher harmonic magnetic excitation force becomes striking and noise is increased.

Further, as shown in FIG. 4, it is well known that when there is a load on an induction motor, magnetic flux 9 (9a, 9b) is incident in a direction inclined with respect to the diameter direction rather than being incident in the direction of the diameter of the rotor. Because of this, when slot apertures 8 are present, the magnetic flux 9 including a higher harmonic component incident to the rotor is divided between a magnetic flux component 9a that passes through the rotor core 2 to become incident to the rotor conductors 4 and a magnetic flux component 9b that is directly incident to the head part of the rotor conductors 4 and does not pass through the rotor core 2 With regards to the magnetic flux component 9a passing through the **(rotor)** core 2, its higher harmonic component is attenuated due to skin effects occurring at the rotor core 2, but there is little attenuation of the higher harmonic component of the magnetic flux component 9b that is directly incident to the rotor conductors 4. The higher harmonic in secondary copper loss occurring at the rotor conductors 4 is therefore caused to increase.

This kind of noise and higher harmonic in secondary copper loss can be reduced by increasing the distance in the direction of the diameter from the surface of the rotor core shown in FIG. 2 to the rotor bars, i.e. the rotor slot aperture height h. This suppresses the influence of magnetomotive force with respect to noise and reduces the ripple component within the flux density and, regarding the higher harmonic in secondary copper loss, prevents the magnetic flux including the higher harmonic component from being directly incident to the head parts of the rotor conductors. However, secondary leakage reactance increases when the height h of the rotor slot apertures is increased, and it may therefore no longer be possible to increase the power factor.

Because of this, the inventor carried out measurements of power factor, noise, and higher harmonic in secondary copper loss taking the dimensions of the rotor slot apertures as parameters. As a result, the most appropriate range for the width w and the height h of the rotor slot apertures for improving the power factor, noise and higher harmonic in secondary copper loss characteristics can be found out by experimentation. It can then further be determined whether or not this is effective for inductance motors of nominal output ratings of 40kW to 1000kW.

In the following, results are described for the embodiment, for measurements of power factor, noise, and higher harmonic in secondary copper loss for induction motors of nominal output ratings of 40kW and 600kW. These measurements take the slot aperture width w and height h for each of the induction motors as parameters. Eight cases are taken for the width w of 0.0mm for when no aperture is provided to from 1.0mm to 4.0mm in steps of 0.5mm, and four cases are taken for the height h of 0.5mm to 3.0mm, i.e. 0.5mm, 1.0mm, 2.5mm and 3.0mm in the machining processes.

In FIG. 5 and FIG. 6, the vertical axis takes the case where a transformer with a slot aperture of width w of 0mm and height h of 0.5mm is adopted as typical dimensions for a reference value, with measured values being converted so as to be compared with respect to this reference value. Further, solid lines are shown between measured values for which the ratio with respect to the reference value is 1.0 or more, with dotted lines being shown when this is not the case.

As shown in the experimental results of FIG. 5 for an induction motor of a nominal output rating of 40kW, regarding the height h of each slot aperture, leakage reactance can be reduced and the power factor can be improved by providing slot apertures. However, when the height h exceeds 2.5mm, a power factor in excess of the reference value cannot be achieved, but when the height h is 2.5mm and the slot aperture width w is slightly less than 2.0mm, a power factor in excess of the reference value can be confirmed. This is the same for the induction motor of a nominal output rating of 600kW, and as shown in the experimental results of FIG. 6, the absolute values are different but the inclination is substantially the same as for the experimental results shown in FIG. 5.

It is therefore preferable to set the width w of the slot apertures to be greater than 2.0mm and to set the height h of the slot apertures in the range of 0.5mm to 2.5mm in order to make the power factor equal to or greater than the reference value.

Next, a description is given of the experimental results for noise. In FIG. 7 and FIG. 8, the reference value is set in the same way as in FIG. 5 and FIG. 6 and experimental results are shown for induction motors of nominal output ratings of 40kW and 600kW, respectively, with solid lines being drawn between measured values for noise ratios that are less than or equal to a reference value and dotted lines being drawn when this is not the case. As can be understood from FIG. 7, when the width w of a slot aperture is increased with respect to the height h of each slot aperture for induction motors of a nominal output rating of 40kW, the ripple component of the gap flux density is increased by increasing the width w of the slot aperture as described above, and noise is therefore increased. However, when the height h of the slot apertures exceeds 1.0mm, the noise ratio becomes less than or equal to the reference value, and when the width w of the slot apertures becomes less than or equal to 3.5mm, the noise ratio becomes less than the reference value. This is the same for induction motors of a nominal output rating of 600kW and, as shown in the experimental results in FIG. 8, the absolute values are different but the inclination is substantially the same as for the experimental results shown in FIG. 7.

It is therefore preferable to set the slot aperture height h to 1.0mm or greater and set the slot aperture width w to 3.5mm or less in order to make the noise ratio less than or equal to the reference value.

Next, the same kind of description is given of the experimental results for the higher harmonic in secondary copper loss as for the case of the power factor and noise measurement results. In FIG. 9 and FIG. 10, a reference value is set in the same way as for the power factor and noise measurements described above, with experimental results for induction motors of nominal output ratings of 40kW and 600kW being shown as solid lines between measured values for which the higher harmonic in secondary copper loss ratio is less than or equal to the reference value and being shown as dotted lines when this is not the case.

As can be understood from FIG. 9, with respect to the height h of the slot apertures, the higher harmonic in secondary copper loss has a minimum value with respect to the slot aperture width w. The following two reasons are given for this. First, slot apertures are provided, and, with regards to the range up to which a minimum can be obtained for the higher harmonic in secondary copper loss ratio, the leakage reactance is reduced by providing slot apertures and the primary current is therefore reduced. This causes the secondary current itself flowing to the rotor conductors to become small. On the other hand, regarding the range where the higher harmonic in secondary copper loss ratio becomes a minimum and then increases again, this can be said to be because the influence of the magnetic flux component 9b that is directly incident to the rotor conductors 4 is increased by increasing the width w of the slot apertures, as shown in FIG. 4.

As a result of this, it can therefore be confirmed in FIG. 9 that the minimum value for the higher harmonic in secondary copper loss ratio with respect to the height h of the slot apertures exists within a range of a slot aperture width w of greater than or equal to 1.0mm to less than or equal to 3.5mm, with this value being the reference value or less within this range when the height h of the slot apertures is 1.0mm or more. This is the same for induction motors of a nominal output rating of 600kW and, as shown in the experimental results in FIG. 10, the absolute values are different but the inclination is substantially the same as for the experimental results shown in FIG. 9.

It is therefore preferable to set the slot aperture height h to 1.0mm or greater and set the slot aperture width w in the range of 1.0mm to 3.5mm in order to make the noise ratio less than or equal to the reference value.

The existence of appropriate ranges of dimensions of the rotor slot apertures for improving the characteristics of the power factor, noise and higher harmonic in secondary copper loss individually can be understood from the above but, next, the dimensions for the rotor slot apertures shown in FIG. 5 to FIG. 10 are adopted taking the characteristics of the power factor, noise and higher harmonic in secondary copper loss into consideration collectively. FIG. 11 is a view collectively showing these characteristics.

FIG. 11 is a view where the horizontal axis shows the slot aperture width w and the vertical axis shows the slot aperture height h, with the range of dimensions for the rotary slot apertures occurring for each characteristic being shown using three different types of hatching. As can be understood from FIG. 11, the range of slot aperture dimensions for simultaneously improving the characteristics for the power factor, noise and higher harmonic in secondary copper loss is an aperture width w in excess of 2.0mm and less than or equal to 3.5mm, and a height h of from 1.0mm to 2.5mm. This is to say that the characteristics of the power factor, noise and higher harmonic in secondary copper loss can all simultaneously be improved within the portion encompassed by a, b, c and d where the three types of hatching overlap.

Of this range, the minimum value of the aperture width w is defined from the results of measurements of the power factor and the maximum value is defined from results of measurements for the noise and higher harmonic in secondary copper loss. Further, the minimum value of the aperture height h is defined by the results of the measurements for the noise and the higher harmonic in secondary copper loss and the maximum value is defined by the measurement results for the power factor.

In addition to the measurement examples shown in this embodiment, measurements were also carried out for induction motors of 160kW, 400kW and 1000kW ratings, although this is not shown in the drawings. As a result, although the absolute values for each characteristic are different, the range of the appropriate slot aperture dimensions can be confirmed to be the same as the range of the appropriate slot aperture dimensions for the aforementioned 40kW and 600kW rated induction motors.

According to the above embodiment, power factor can be improved, noise can be reduced and higher harmonic in secondary copper loss can be reduced in induction motors with nominal output ratings of 40kW to 1000kW by setting the width w of slot apertures 8 provided at a rotor core 2, i.e. the dimension in a circumferential direction of the rotor core 2 in a range of greater than 2.0mm and less than or equal to 3.5mm and setting the height h, i.e. the dimension in the direction of the diameter of the rotor core 2, within the range of 1.0mm to 2.5mm, i.e. the power factor is increased and noise and stray loss are reduced so as to achieve an overall improvement in the characteristics. Therefore, if the induction motor rotor slot aperture dimensions are applied to induction motors of nominal output ratings of 40kW to 1000kW, a high-performance induction motor and rotor thereof capable of increasing power factor and reducing noise and stray loss can be provided.

Next, a further embodiment of the present invention is described using FIG. 12.

FIG. 12 is a horizontal cross-sectional view showing the periphery of a rotor having slots of an induction motor of a further embodiment of the present invention. As described above for FIG. 2, rotor conductors 4, i.e. rotor windings, are formed at the rotor of this embodiment at prescribed distances in the circumferential direction, with a plurality of slots 3 being provided at the outer periphery of the rotor core 2 in such a manner as to be formed one after another in the axial direction. Conductive material is then cast at each of this plurality of slots 3.

Slot apertures 8 are provided by machining processes so as to be formed one after another at the rotor surface side of the plurality of slots 3 provided at the outer periphery of the rotor core 2 in such a manner as to communicate with these slots. In this embodiment, however, the slot apertures 8 are provided in such a manner that recesses are formed in the rotor conductors 4. The dimensions for the width w of these slot apertures 8 is then set within the range of greater than 2.0mm and less than or equal to 3.5mm, a height hₐ of the recesses formed in the rotor conductors 4 is set to be within the range of 0.5mm to 2.0mm, and a height h (including the height hₐ of the recesses formed in the rotor conductors 4) is set to be within the range of 1.0mm to 2.5mm.

When slot apertures 8 are provided in such a manner that recesses are formed at the rotor conductors 4, the dimension from the outer surface of the rotor core 2 to the outer surface of the rotor conductor 4, i.e. the dimension h-ha is smaller than the dimension from the outer surface of the rotor core 2 to the outer surfaces of the rotor conductors 4 for the rotor of the previous example. As a result, a value that is obtained by adding 0.66 to a value obtained by dividing the dimension h-hₐ by the width of the slot apertures 8, i.e. the relative permeance, is reduced from that of the rotor of the previous example and slot leakage reactance that is proportional to this is also reduced.

Therefore, according to this embodiment, as with the previous example, the power factor can be increased, noise and stray loss can be reduced so that improvements in characteristics can be achieved, and as slot leakage reactance can be reduced to a greater extent than in the previous example, the power factor can be further improved.

In the embodiments described above, a description has been given of a so-called die cast rotor where conductive material is cast into slots in a rotor core so as to form rotor conductors, but the same results can also be obtained when a conductor is hammered into the slots so as to form a rotor.

### Industrial Applicability

According to the present invention described above, there is provided a high-performance inductance motor and rotor thereof capable of increasing power factor and reducing noise and stray loss by setting dimensions of rotor slot apertures to appropriate ranges.

## Claims

1. An induction motor equipped with: a stator; and a rotor concentrically arranged in said stator in such a manner as to leave a prescribed air gap with the inner periphery of said stator, and having a plurality of slots formed one after another in an axial direction at prescribed distances in a circumferential direction, wherein apertures communicating with said slots are provided on a rotor surface side of said slots, with a dimension in a circumferential direction of said apertures being set in a range of greater than 2.0mm and less than 3.5mm and a dimension in a diameter direction of said apertures being set in a range of 1.0mm to 2.5mm.

2. An induction motor, with a nominal output rating of 40kW to 600kW, equipped with: a stator; and a rotor concentrically arranged in said stator in such a manner as to leave a prescribed air gap with the inner periphery of said stator, and having a plurality of slots formed one after another in an axial direction at prescribed distances in a circumferential direction, wherein apertures communicating with said slots are provided on a rotor surface side of said slots, with a dimension in a circumferential direction of said apertures being set in a range of greater than 2.0mm and less than 3.5mm and a dimension in a diameter direction of said apertures being set in a range of 1.0mm to 2.5mm.

3. The induction motor of claim 2, wherein a nominal output rating of said induction motor is 40kW to 1000kW.

4. An induction motor equipped with: a stator; and a rotor concentrically arranged in said stator in such a manner as to leave a prescribed air gap with the inner periphery of said stator, said rotor having: a rotor core having a plurality of slots formed one after another in an axial direction at prescribed distances in a circumferential direction; and rotor bars housed in said slots, wherein apertures communicating with said slots are provided on a rotor surface side of said slots, with a dimension in a circumferential direction of said apertures being set in a range of greater than 2.0mm and less than 3.5mm and a dimension in a diameter direction of said apertures being set in a range of 1.0mm to 2.5mm.

5. An induction motor equipped with: a stator; and a rotor concentrically arranged in said stator in such a manner as to leave a prescribed air gap with the inner periphery of said stator, said rotor having: a rotor core having a plurality of slots formed one after another in an axial direction at prescribed distances in a circumferential direction; and rotor bars housed in said slots, wherein apertures communicating with said slots are provided on a rotor surface side of said slots in such a manner that recesses are formed at said housed rotor bars, with a dimension in a circumferential direction of said apertures being set in a range of greater than 2.0mm and less than 3.5mm and a dimension in a diameter direction of said apertures being set in a range of 1.0mm to 2.5mm.

6. An induction motor equipped with: a stator; and a rotor concentrically arranged in said stator in such a manner as to leave a prescribed air gap with the inner periphery of said stator, said rotor having: a rotor core having a plurality of slots formed one after another in an axial direction at prescribed distances in a circumferential direction; and rotor bars housed in said slots, wherein apertures communicating with said slots are provided on a rotor surface side of said slots is such a manner that recesses are formed at said housed rotor bars, with a dimension in a circumferential direction of said apertures being set in a range of 2.0mm to 3.5mm, a dimension in a diameter direction of said apertures being set in a range of 1.0mm to 2.5mm and a height of said recesses being set at 0.5mm to 2.0mm.

7. The induction motor of any one of claims 1 to 6, wherein said apertures are formed by machining processes.

8. The induction motor of any one of claims 4 to 6, wherein said apertures are formed by machining processes after said rotor bars are housed in said slots.

9. A rotor, for an induction motor, having a plurality of slots formed one after another in an axial direction at prescribed distances in a circumferential direction, wherein apertures communicating with said slots are provided on a rotor surface side of said slots, with a dimension in a circumferential direction of said apertures being set in a range of greater than 2.0mm and less than 3.5mm and a dimension in a diameter direction of said apertures being set in a range of 1.0mm to 2.5mm.

10. A rotor, for an induction motor of a nominal output rating of 40kW to 600kW, having a plurality of slots formed one after another in an axial direction at prescribed distances in a circumferential direction, wherein apertures communicating with said slots are provided on a rotor surface side of said slots, with a dimension in a circumferential direction of said apertures being set in a range of greater than 2.0mm and less than 3.5mm and a dimension in a diameter direction of said apertures being set in a range of 1.0mm to 2.5mm.

11. The rotor, for an induction motor, of claim 2, wherein a nominal output rating of said induction motor is 40kW to 1000kW.

12. A rotor, for an induction motor, equipped with: a rotor core having a plurality of slots formed one after another in an axial direction at prescribed distances in a circumferential direction; and rotor bars housed in said slots, wherein apertures communicating with said slots are provided on a rotor surface side of said slots, with a dimension in a circumferential direction of said apertures being set in a range of greater than 2.0mm and less than 3.5mm and a dimension from a surface of said rotor to said rotor bars being set in a range of 1.0mm to 2.5mm.

13. A rotor, for an induction motor, equipped with: a rotor core having a plurality of slots formed one after another in an axial direction at prescribed distances in a circumferential direction; and rotor bars housed in said slots, wherein apertures communicating with said slots are provided on a rotor surface side of said slots in such a manner that recesses are formed at said housed rotor bars, with a dimension in a circumferential direction of said apertures being set in a range of greater than 2.0mm and less than 3.5mm and a dimension from a surface of said rotor to a base part of said recesses being set in a range of 1.0mm to 2.5mm.

14. A rotor, for an induction motor, equipped with: a rotor core having a plurality of slots formed one after another in an axial direction at prescribed distances in a circumferential direction; and rotor bars housed in said slots, wherein apertures communicating with said slots are provided on a rotor surface side of said slots in such a manner that recesses are formed at said housed rotor bars, with a dimension in a circumferential direction of said apertures being set in a range of greater than 2.0mm and less than 3.5mm, a dimension from a surface of said rotor to a base part of said recesses being set in a range of 1.0mm to 2.5mm, and a height of said recess being set at 0.5mm to 2.0mm.

15. The rotor, for an induction motor, of any one of claims 9 to 14, wherein said apertures are formed by machining processes.

16. The rotor, for an induction motor, of any one of claims 12 to 14, wherein said apertures are formed by machining processes after said rotor bars are housed in said slots.
